# EUROPEAN PATENT APPLICATION

(11) **EP 2 093 966 A1**
(43) Date of publication of application: **26.08.2009**
(21) Application number: 08003336.8
(22) Date of filing: 25.02.2008
(51) Int. Cl.: H04L 29/06, H04L 29/08, H04M 3/56

(54) **Configuring a network communication under control of a rule base**

(71) Applicant: Koninklijke KPN N.V., 2516 CK The Hague (NL)
(72) Inventor: van Steenbergen, Ate Sander, 9737 NN Groningen (NL); Alberts, Alber Willem, 9751 TC Haren (NL); Keijzer, Herman, 9727 DN Groningen (NL)
(74) Representative: Wuyts, Koenraad Maria

(57) **Abstract**

A service is provided for enabling parties (104,106,108) to communicate via a network (102). The method comprises: receiving an indication that a communication is sought to be established; upon receipt of the indication, determining an actual configuration of the communication under combined control of the indication and a rule base (146); and controlling initiating the communication via the network in the actual configuration.

## Description

### FIELD OF THE INVENTION

The invention relates to a method of providing a service on a communication network.

### BACKGROUND ART

Currently, electronic communications, e.g., a telephone call, sending a message, or streaming a movie, cannot readily be managed, created or modified with respect to locations of sending and receiving, identity of receiving parties, time of occurrence, etc., and regardless of hardware or software architecture, network domains and properties.

An approach to this problem is disclosed in published European patent application EP 1819132 assigned to KPN, the same Assignee. This document discloses sending an address-identifier, in order to retrieve an application specific address, from an end-user device to a server that is accessible by the end-user device via a communications network. The identifier can be a numerical or alpha-numeric code that is associated with an end-user, or end-user device, to be addressed. The server may contain (or has access to) a database, wherein one or more application specific addresses of a particular user are associated with the address-identifier. It is also possible that a code that identifies the application, in relation to which another user is to be addressed, is sent to the server together with the address-identifier. The determination of the appropriate application, specific address then depends on both the address-identifier and this code.

### SUMMARY OF THE INVENTION

The inventors now propose a further optimization to a communications environment. To this end, the inventors propose a method of providing a service on a first network for enabling parties to communicate via a second network. The method comprises: receiving via the first network an indication that a communication is sought to be established; upon receipt of the indication, determining an actual configuration of the communication under combined control of the indication and a rule base; and controlling initiation of the communication via the second network in the actual configuration.

The indication is used to initiate the process of configuring (or: setting up) the communication under control of a rule base before the communication itself is initiated in the actual configuration determined via the rule base. Preferably, the method is being carried out fully automatically by an electronic system under software control. In one embodiment of the invention, the method is carried out by the same entity (e.g., service provider) that provides the communication service itself. In another embodiment, the method of the invention is carried out by an entity different from the communications service provider. The first network as used by the service can, but need not, be the same as the second network used for the eventual communication. The first network and the second network can each be one of e.g., the Internet or another data network such as an intranet, or a communications network such as PSTN (Public Switched telephone Network) or GSM (Global System for Mobile communications), etc.

The rule base specifics one or more rules for at least a specific one of the parties regarding an attribute of the communication, e.g., a process of communicating with the specific party (via telephone, via email, via fax, via SMS (Short Message Service), via web-log, etc.), means for communicating (e.g., means for communicating only text, means for communicating only graphics or pictures, means for communicating only voice or another sound, means for communicating voice and video, etc.), an identity of a party, an address for reaching the specific party (street address, an address on a network such as Internet, IP (Internet Protocol) address, SIP (Session Initiation Protocol) address, or on another network such as PSTN, mobile number GSM, etc.), timing, duration or location of availability of the specific party to be reached, or geographic location of one or more of the parties, or any other attribute that enables to adapt the communication to the party's preferences and/or to the capabilities of the party's communication facilities. With regard to the attribute "geographic location", this can be inferred from, e.g., IP number, country code, area code, ZIP-code, latitude/longitude of one of the parties (as determined by e.g., their GPS-enabled personal communications device or by their position with respect to the base stations in a cellular telecommunications network, etc.

Preferably, the specific party has stated his/her rules and attributes to the provider of the service for their being implemented in the rule base. Alternatively, the rules and/or attributes have been determined on the basis of a party's profile created elsewhere or are inferred from a party's history of interaction with the second network. For example, a person with a residence at a street address in a particular time zone (e.g., Central European Time (CET)) is not likely to be available in the office during his/her regular office hours to a caller residing in another time zone (e.g., Pacific Time Zone (PTZ) in the US) when the caller makes a call to that person's office during the caller's office hours. The disjoint time periods may invoke a rule in the rule base that a telephone call in this case is made to the person's home telephone number or the person's mobile phone and only if it is not later than, e.g., 23:00 hours in the person's local time. As an alternative, the system proposes in this case to the initiator that the call is scheduled at a time slot during the office hours of the recipient. As another example, the service in the method of the invention is provided by a communications service provider, who has already an overview of which subscriber has which telephone number, what email account and what IP address, etc. In this case, the service provider installs a rule that a subscriber can be reached via telephone at a certain telephone number during certain hours and else via email. As yet another example, a person's residential street address identifies a person's country of residence. A rule can be adopted that certain public holidays for this person are blocked beforehand for initiating the communicating to this person, e.g., on Thanksgiving in the US (fourth Thursday of November) or on Queen's Day in the Netherlands, the Netherlands Antilles and Aruba (April 30 or April 29 if April 30 is a Sunday), unless the person has inactivated this rule. A more detailed rule can be adopted that blocks in advance a certain time slot if the person is in a certain geographical region. For example, a US resident can activate a rule that blocks the initiating of an incoming call to him/her on a Dutch public holiday while visiting the Netherlands. As yet another example, a person from Western Europe is traveling in Japan, and his/her mobile telephone is not compatible with the Japanese telecommunications infrastructure. That is, the mobile telephone does not work anymore. The person's electronic calendar or rule base specifies the hotels at which the person can be contacted on certain dates, e.g., by leaving a voice mail or email. A rule can then be specified to notify the initiator so that the initiator can look-up the telephone number or email address of the relevant hotel, e.g., via the Japanese equivalent of the "yellow pages" telephone directory. Alternatively, the system of the invention has a background service for retrieving the relevant contact information, e.g., fully automated at a server or via a human operator. The initiator is then notified of the option to have the communication (telephone call, fax, or email) initiated with the hotel. Accordingly, despite the fact that the destination address of the communication is changing all the time, from the view point of the initiator, a communications session can nevertheless be initiated. More intricate and more complex rules can be implemented so as to determine the actual configuration for the communication if the necessary information to do so is available to the system of the invention.

The controlling of the initiating includes, e.g., automatically establishing the connection between the parties (or their client equipment) for the communication in the actual configuration as determined by the rule base. Alternatively, the controlling of the initiating includes notifying the parties (or their client equipment) of the actual configuration as determined by the rule base so that the notified parties or their equipment can establish the interconnection for the communicating according to the actual configuration thus determined.

The indication that a communication is sought to be established, is received from an initiator, i.e., an entity (e.g., a person or automatic electronic equipment) that causes the method of the invention to be invoked. In an embodiment of the invention, the initiator is different from one of the parties between which the communication is sought to be established. For example, the initiator is a supervising authority, a broker service (e.g., a dating service), an automated communication system, etc. For example, the initiator is an online auction system that enables people to sell and buy goods. Upon registering with the auction system, buyers and sellers in the auction system can use the method of the invention so as to facilitate personal interaction between them, e.g., by means of individually pre-specifying their rules in the rule base. In another embodiment, the initiator is one of the parties. Having the rule base determine the actual configuration of the communication facilitates setting up the communication, preferably automatically without any further user intervention or with minimum user intervention, and avoiding back-and-forth calls or emails in order to set up the communication.

In a further embodiment of the invention, the indication comprises an attribute representative of an intended configuration of the communication. The determining of the actual configuration comprises conditionally modifying the attribute under control of the rule base.

The attribute referred to above is representative of, e.g., an identity of one or more of the parties; a temporal aspect of the communication (e.g., scheduled well ahead of time, or practically instantaneous, time of the day, duration); a modality of the communication (e.g., via telephony, mobile telephony, video telephony, via video conferencing, via streaming of a movie, via sending of an email, via an SMS message, via gaming on a computer network, etc.); means for communicating via the network (e.g., web browser, media player, SIP client, etc.); modalities for communicating (e.g., text, video, audio or a combination thereof); a subject or a topic of the communication, etc. That is, the attributes of a communication determine the settings of the configuration wherein the communication is to take place, and these are determined via the rule base. According to the rule base, the value of an attribute can be conditionally changed depending on the rules that get invoked.

For example, an indication is received that a communication is sought to be established with a certain person (here: receiver) regarding a certain topic and at a certain time of the day via the telephone. In this scenario, a first attribute identifies the receiver, a second attribute identifies the topic, a third attribute identifies the time of the day and the fourth attribute identifies the means for communicating. The intended receiver has specified in his/her rules that he/she is not going to be available for this topic, but that instead another person is to be addressed if the communication is going to be about this specific topic. The method of the invention now replaces the identifier of the intended receiver by the identifier of the other person and controls initiating the desired communication with this other person.

As another example, the attribute "topic" is specifically interesting regarding communications in a commercial or business-like setting. The attribute "topic" enables to control the actual communication so that the proper person at the receiver side is automatically contacted. In contrast, conventionally someone at the receiver end (e.g., a help desk, customer service officer or a receptionist) is to interpret the information obtained in a conventional communication so as to determine to whom to Forward the information for proper handling. As yet another example, the method of the invention enables to select a receiving party based on the attribute topic. Imagine a person, who is a rabid soccer fan and is also supporter of the local soccer club, say "FC Groningen". Imagine further a live TV broadcast of a soccer match of FC Groningen. If during the broadcast this person needs to be comforted extremely badly by another FC Groningen supporter, he may submit an indication with the topic "FC Groningen", whereupon the service with the method of the invention determines in the rule base the party most suitable for this topic based on the entry "FC Groningen". A whole sub-culture can be created by people specifying in their rules that under such conditions they are available for receiving the email SMS or the call. Similar considerations apply in case the supporter needs to communicate for pure bliss. An attribute "mood" could also be used to discriminate between the two.

As yet another example, consider a person who submits an indication that a communication is to be established with a particular other person. The rule base contains rules of the particular other person on the basis of which it can be inferred that this other person is not available at the time of the indication being submitted, but at a moment in the near future. For example, the other person is still on his/her way to a location and does not want to handle a telephone call while driving. As a result, the communication is automatically controlled to be initiated at this later moment, preferably after notification of the initiating person. This notifying may also be controlled by rules in the rule base: the initiator may have specified that he/she is to be notified of the time shift, or the other person may have specified to notify people, who initiate the communication, of the time shift given an expected time of availability, etc.

In another example, the method of the invention determines the actual configuration by accessing a database containing at least a declared preference of a specific one of the parties regarding the communicating. The database is located, e.g., at a network-enabled client of the specific party and is accessed under control of a relevant rule of the rule base that gets invoked, or forms part of the rule base itself.

In a further embodiment, the determining of the actual configuration comprises requesting at least one of the parties to accept or modify the attribute. Alternatively, or in addition, the determining of the actual configuration comprises accessing a database, e.g., at a client of at least a specific one of the parties or at a server of the service provider. The service provider thus can modify the attributes based on the information stored in the database, and as a result optimize the communication. The database, relevant to this client is, e.g., programmed by the client's user according to his/her preferences, or is set by the service provider or another party involved in implementing the service. Alternatively, or in addition, the database comprises an activity schedule (e.g., an electronic calendar) of the specific party. This then enables to select the proper time slots and geographic locations available to contact the specific party according to the rules specified for this person in the rule base. Alternatively, or in addition, the database comprises information about an inventory of means for communicating via the network(s), accessible to this client or user.

In the invention, the intended communication is treated as an object that has one or more attributes assigned to it by the initiator. The service of the invention operates on the attributes. The modified attributes determine the actual configuration of the communication that is to be established. The service subjects the original attributes to one or more rules. The rules are, for example, specified in advance and stored in a rule base, or arc under current control of the parties identified in the intended configuration of the communication sought to be established. Accordingly, the method of the invention enables to automatically modify the way wherein parties communicate so as to optimize the interaction between the parties with respect to a context under control of the rule base.

Conventionally, clients have addressable identifiers and are configured for connecting to a communication network. For example, a telephone apparatus is connected to a socket having a specific identifier. As another example, the network provider has the information that a specific telephone number at a certain socket is geographically located in a certain building on a certain street. Conventionally, a communication is initiated at a client (here: the "sender") that is configured for the network. As a result, the identifiers of the clients and attributes of the communication configuration, as intended by the sender, are pre-determined. Note that conventionally, the initiator has no information about the configuration at the receiver. The sender only has an addressable identifier. In the invention, the communication is initiated in the communication system on the basis of a rule base. The rules involved arc specified by, or on behalf of, the intended recipient, and, in some scenarios, are specified by or on behalf of the initiator. As an example of the latter scenario involving rules associated with the initiator and other rules associated with the recipient, see the example discussed above with regard to the initiator and recipient residing in different time zones. Upon unavailability of the recipient for receiving calls during certain time slots, the rules of the initiator are consulted and a proposal is made by the system to the initiator to re-schedule the call to a more convenient time slot for both parties.

The invention is essentially different from, e.g., call-forwarding. As known, call-forwarding enables a user to program a telephone, having a first telephone number, wit ha second number so as to have an incoming call at the telephone of the first telephone number routed to another telephone with the second number. That is, the communication has already been initiated before the forwarding takes place.

The invention essentially differs from making a telephone call via a web interface. In this known scenario, the initiator him/herself selects the way of communicating, the timing, and the address, and can use no information about the party to be contacted other than the latter's address.

The invention essentially differs from setting up a teleconference involving a large number of participants. The initiator can plan the teleconference to take place on a certain day and at a certain hour, but the teleconference thus planned either takes place or it does not. There is no rule base that specifies that all participants have an IM (Instant Messaging) client and that a certain participant has only a presence client on a set-top box on a TV, so that the only option is that all communication should go according to IM in order for everybody to be able to participate in the communication.

Above scenarios describing the invention cover activities of a communications service provider or of a network operator, e.g., activities that are not under control of an entity that seeks to establish the communication by supplying the indication, or activities that are centrally controlled. For covering the activities of an entity that both controls such activities and is the initiator, e.g., an end-user or consumer, or for covering a decentralized configuration, the invention is formulated as a different variation on the same theme.

Accordingly, the invention also relates to a method of setting up a communication with at least one party via a network. The method comprises creating an indication that a communication is sought to be established; determining an actual configuration of the communication under combined control of the indication and a rule base; and controlling initiating the communication via the network in the actual configuration. The rule base is accessed, e.g., via the electronic equipment of the party with whom the communication is sought to be established. A first party may set up their own rule base with rules to govern the setting up of a communication configuration if the first party is to serve as a receiver. The rule base is located in memory and is accessible to a second party seeking to establish a communication with the first party. The memory is located, e.g., at the electronic equipment of the first party or at other electronic equipment, e.g., at a server on the data network, where rule bases of different parties are stored. In the latter scenario, access to the rule base is obtained indirectly via data communication with the electronic equipment of the first party, that in turn forwards the second party's access request to the server, or access to the rule base is obtained directly as the server address is known. Further features are similar to the ones discussed above in the scenario of the service provider and are addressed in the dependent claims.

The invention may also be embodied in computer software to support implementing the method of the invention. This software is then yet another manner to commercially exploit the concept of the invention. For example, the invention also relates to software for implementing a method of setting up a communication via a network between two or more parties. The software comprises: first instructions for creating an indication that a communication is sought to be established; second instructions for determining an actual configuration of the communication under combined control of thc indication and a rule base; and third instructions for controlling initiating the communication via the network in the actual configuration. Such software is made available to consumers for being installed at their network-enabled computers of other communications equipment, e.g., their mobile phones. Preferably, the software generates a user interface at the computer or equipment so as to let the user enter the indication. The computer or equipment consults the rule base of the intended recipient and determines the actual configuration of the communication under combined control of the indication and the rule base. Preferably, the user receives at the user interface a notification of the actual configuration, e.g., for confirming acceptance or for refusing acceptance. If acceptance is confirmed via the user interface, the communication is initiated in the actual configuration determined. If the acceptance is refused, the software assumes an initial state for awaiting input in the form of an indication being created.

### BRIEF DESCRIPTION OF THE DRAWING

The invention is explained in further detail, by way of example and with reference to the accompanying drawing, wherein:
Figs. 1 and 2 are block diagrams of systems in the invention;
Fig.3 is a diagram of a graphical user interface used in the invention; and
Fig.4 is a block diagram of a further system in the invention.

Throughout the Figures, similar or corresponding features are indicated by same reference numerals.

### DETAILED EMBODIMENTS

Clients have addressable identifiers and are configured for connecting to a network. For example, a telephone apparatus is connected to a socket having a specific identifier. As another example, the network provider has the information that a specific telephone number at a certain socket is geographically located in a certain building on a certain street. Conventionally, a communication is initiated from a client (here: the equipment of the "sender") that is configured for the network. As a result, the identifiers of the clients and attributes of the communication configuration, as intended by the sender, are pre-determined. Note that conventionally, the initiator has no information about the configuration at the receiver before initiation of the communication. The sender only has an addressable identifier.

In the invention, the communication is initiated in the communication system on the basis of a rule base.

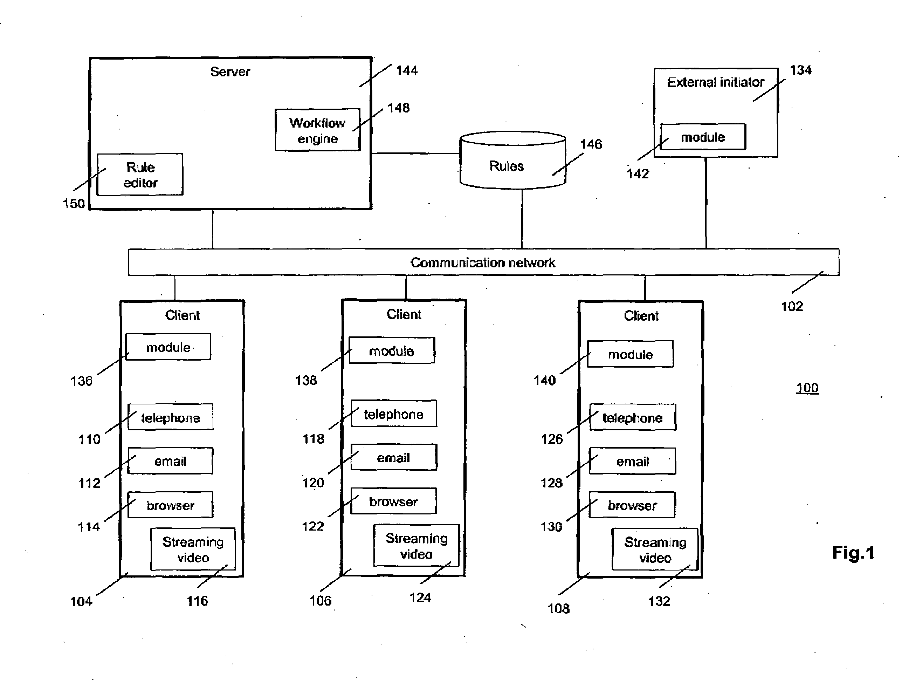

Fig.1 is a block diagram of a system 100 according to the invention. System 100 comprises a communication network 102 that interconnects a plurality of clients 104, 106, ..., 108. Network 102 comprises, e.g., the Internet and the conventional telephony network. Clients 104-108 comprise various means for communicating with one another via network 102. For example, client 104 has a telephone client 110 (e.g., PSTN and/or SIP), an email client 112, an Internet browser 114 and a streaming video client 116. Client 106 comprises a telephone client 118, an email application 120, an Internet browser 122 and a streaming video client 124. Client 108 comprises a telephone client 126, an email application 128, an Internet browser 130 and a streaming video client 132. System 100 further comprises a client 134 of an external party, who sets up a communication between two or more of clients 104-108 through system 100 in some scenarios, whereas, in other scenarios, the external party does not play an active role in the operation of system 100. Components 110 - 132 can be selectively invoked for the communication configured according the invention, as discussed below.

Clients 104-108 can be implemented on various hardware or apparatus, e.g., a TV set-top box, a PC, a mobile telephone or smart phone, a palmtop computer or PDA, etc.

Each of clients 104-108 and client 134 has a configuration module 136, 138, 140 and 142 that serves to implement the invention as is discussed below in further detail. Each of configuration modules 136-142 is implemented as, e.g., a software application, a hardware component such as an electronic circuit, or a combination of both.

Operation of system 100 is as follows. External party of client 134 or a user of, say, client 104, intends to set up a communication via telephone with, say, the user of client 106. The external party or this user will be referred to herein below as "initiator" for clarity. To this end, the initiator notifies a server 144 via their respective configuration module, here module 136 or module 142. Module 136 or module 142 does this preferably with as little intervention from the user as possible. For example, module 136 or module 142 lets the respective user interact with server 144 through a user interface (not shown) of their client, e.g., a graphical user interface (GUI). In the user interface, the user can select, e.g., following attributes: the identity of the other user (referred to as "destination" herein), here the user of client 106, with whom the initiator desires to communicate; a type, or combination of types, of communication intended to be established (telephone call; video conference; email; streaming of electronic content; gaming; etc.); a topic (e.g., subject of the telephone call, of the conference call or of the email; title of the movie to be streamed; type of game to be played; etc.); time slot wherein the communication is intended to take place (now; later after a pre-determined time period has clapsed; on a specific date and at a specific time in the future; etc.)

The descriptive attributes selected or otherwise entered by the initiator are then sent to server 144. Server 144 processes the attributes under control of one or more rules in a rule base 146.

For example, rule base 146 includes a rule that controls a workflow engine 148 to check the temporal attribute: whether or not the destination user (here: the user of client 106) is available for communicating with the initiator. The destination user may have declared in module 138 that he/she does not wish to communicate with the initiator, never ever. In that case, workflow engine 148 issues a notification to the client of the initiator stating that the destination user is not available. If the destination user has declared not to be available to the initiator only for some time, workflow engine 148 issues a notification to the initiator client that the communication is scheduled to take place later. This could be implemented through, e.g., automatically consulting the electronic calendar of the destination user, the calendar residing on client 106 and rendered accessible for this purpose. Workflow engine 148 then reserves a future time slot for automatically initiating the communication on behalf of the initiator. The reservation can also be automatically entered into the electronic calendar of both initiator and destination. If the destination user has not declared to module 136 that he/she is unavailable to the initiator, workflow engine 148 sets up the communication.

As another example, rule base 146 includes a rule that controls engine 148 to check whether or not the subject attribute suits the destination user. The destination user may have declared in module 138 that he/she does not accept communication concerning a certain topic, or that he/she does not accept communications from this particular initiator concerning this topic, or that he/she does not accept communications concerning this topic during certain time slots, etc. Workflow engine 148 checks if the rules are applicable to this case, and either sets up the communication or does not set it up, if no other rules apply. The destination user may have declared in module 138 that communications regarding the topic, as specified in the attribute, better be sent to the user of client 108. Workflow engine 148 then modifies the identity of the destination user accordingly, i.e., modifies the destination attribute, and either sets up the communication to the new destination user (the user of client 108), optionally after notifying the initiator who chose the original attributes, or checks if there are further rules applicable to the new destination.

As yet another example, the destination user has declared to module 138 or in his/her electronic calendar, that he/she is away from his/her home client 106 during the time period wherein the initiator wishes to establish the communication. The destination user has also supplied as alternative the address and/or telephone number where he/she can be reached, and/or has given the telephone number of his/her mobile telephone device. If the initiator's intended communication is a telephone call to the home client 106, workflow engine 148 applies the relevant rules of rule base 146 and automatically changes the intended home telephone number in the attribute automatically to one of the specified alternatives, and then sets up the call. Optionally, the initiator is notified of the change, e.g., in view of the costs incurred.

As yet another example, the initiator has specified in the relevant attributes that he/she wishes to make a telephone call to a specific destination about a specific topic. Server 144 applies the rules of rule base 146 and may change the simple telephone call to a conference call, also involving users of other clients; or server may change the attributes to a scheduled streaming of electronic content or to an email communication. These changes require that the initiator be notified ahead of setting up the communication.

Instead of having declared his/her attributes profile in advance, the destination (user of client 106) decides on a case-by-case basis, e.g., upon receiving a notification from server 144, about the intended communication with the attributes specified by the initiator.

Instead of having the initiator involved in the actual communication, the initiator may only use server 144 to set up a communication between two or more of clients 104-108. In this case the initiator is an external party at client 134 ("external initiator"). For example, the external initiator submits through module 142 his/her intention to have the users of clients 104 and 106 communicate with each other governed by the following attributes, at a certain time slot, and/or about a certain topic, and/or via specific communication application (e.g., email, telephone, SMS, gaming, etc.). Server 144 now checks the rules applicable to both the user of client 104 and the user of client 106 as far as these attributes are concerned, and modifies the attributes accordingly before automatically setting up the communication governed by the modified attributes, or does not set up the communication altogether. This scenario is of interest to an external party who is, e.g., a broker or another mediator (e.g., a real estate broker; a stock broker, a dating service; a service for building a virtual community on the Internet; an online auction service provider, etc. For example, users of clients 104-108 submit their individual profiles to the external party, and the latter looks for adequate matches between individual profiles. Profiling can also be done automatically, e.g., by a provider of a search engine on the Internet. The provider can therefore also operate automatically as broker once the provider has access to system 100, or builds his own system 100 wherein rule base 146 and workflow engine 148 arc under his own control.

For profiling based on searches see, e.g., US patent 6,256,633 incorporated herein by reference. This publication relates to enabling a user to navigate through an electronic data base in a personalized manner. A context is created based on a profile of the user, the profile being at least partly formed in advance. Candidate data is selected from the data base under control of the context and the user is enabled to interact with the candidates. The profile is based on topical information supplied by the user in advance and a history of previous accesses from the user to the data base.

Instead of rule base 146 being centralized, as depicted in Fig.1, rule base 146 may also be fully or partly distributed among clients 104-108 and 134. The user can then more easily edit his/her rules, e.g., offline. On the other hand, server 144 then has to check, via network 102, the rules stored locally at the relevant ones of clients 104-108 and 134 to determine the communication's actual configuration.

Similarly, the functionality of server 144 of Fig,1 can also be fully or partly distributed among clients 104-108 and 134. As a result, system 100 acquires the architecture of a peer-to-peer (P2P) network. As known, various P2P configurations exist, such as a centralized configuration, a decentralized configuration and a controlled centralized configuration. In a centralized configuration, the system depends on a central server that directs the communication between peers. A decentralized configuration does not have a central server, and each peer is capable of acting as a client, as a server or as both. A user connects to the decentralized network by connecting to another user who is connected. In a controlled decentralized configuration a user may act as a client, as a server or as both as in the decentralized configuration, but specific operators control which user is allowed to access which particular server.

The initiator may have or may generate electronic content information for communication to the destination in a unidirectional communication mode, as opposed to a live dialog between the initiator and destination as in a bidirectional telephone or video call. For example, the electronic content information comprises a video clip to be streamed or uploaded to the destination, or an email prepared in advance, or another electronic document, etc. The attributes of the communication as intended by the initiator are submitted to server 144 as discussed above so as to have system 100 configure or reconfigure the communication. The attributes can be submitted to server 144 separately from the electronic content, or together with an address of, or another pointer to, the electronic content, or together with the electronic content.

In the first scenario of submitting the attributes separately, the content remains at the initiator. It can conditionally be converted locally at the initiator and by the initiator if the actual communication so desires. The initiator is preferably notified of the need for conversion. For example, the initiator intends to send a text message, but server 144 modifies this attribute to that for a voice message under control of rules specified by the destination. A reason for this can be, e.g., that the email intended to be sent cannot get processed at the destination client owing to an incompatible email application or owing to a crashed email system.

In the second scenario of submitting the attributes with a pointer to the content, server 144 need not have available a temporary storage. As soon as the actual communication is set up, server 144 retrieves the content under control of the pointer (either unmodified or modified by the initiator so as to comply with the rules specified by the destination) for forwarding it to the destination.

In the third scenario of submitting the content together with the attributes, server 144 buffers the content as received and also conditionally modifies it for compliance with the rules of the destination if the content as received or as modified is to be forwarded later on.

Server 144 preferably has an editor 150 for enabling the users of clients 104-108 and 134 to edit or specify the rules applicable to their individual communication preferences. The users access editor 150 via modules 136-142 and the user interfaces at their respective clients.

From another point of view, the invention takes one step further the system disclosed in US patent application publication 20020133821, incorporated herein by reference. This publication relates to determining electronic content information and the time slots for playing-out based on the activities scheduled in the user's electronic calendar and the user's profile of declared interests. In this manner, the recording and downloading of content is automated based on the user's life style. Within the context of the current invention, the electronic content information is intended to be communicated from the initiator to the destination user under conditions specified in the attributes by the initiator. The system in the invention is then operative to change the attributes according to the destination user's profile and to set up the communication accordingly. In the publication, the known system time-shifts the electronic content via recording under control of a user's electronic calendar.

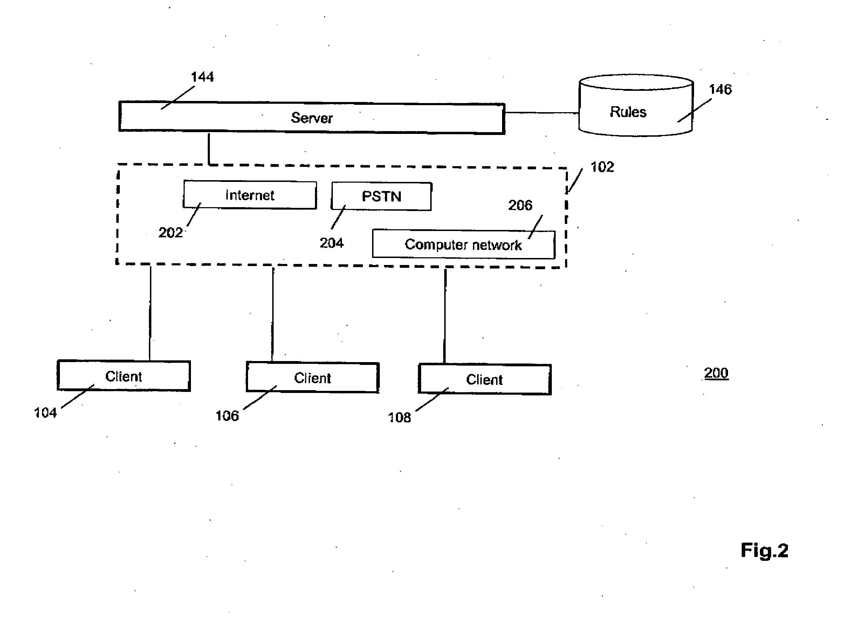

Fig.2 illustrates an embodiment 200 of system 100, wherein network 102 comprises a plurality of different communication networks, e.g., the Internet 202, a public switched telephone network 204, a computer network 206 with a topology different from the Internet 202, e.g., a local area network (LAN), a wide area network (WAN), a global area network (GAN), a peer-to-peer (P2P) network, etc. The indication can be received at server 114 via, e.g., the Internet 202, and the communication configured by system 200, and in accordance with the invention, uses PSTN 204 in the actual configuration of the communication between, e.g., client 104 and client 108.

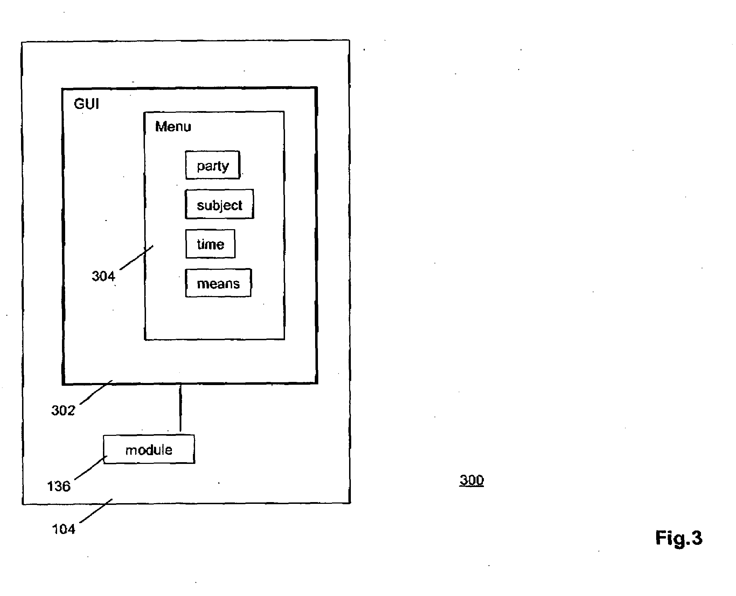

Fig.3 is a diagram 300 to illustrate an example of the interaction between the initiator and system 100 or 200 in order to initiate the communication as discussed above. Upon logging in at server 144, the initiator receives at his/her client, here client 104, data to implement a graphical user interface (GUI) 302 for composing an indication of the intended communication. GUI 302 preferably comprises a menu 304 to select the relevant attributes, e.g., an identity of the party with whom the initiator intends to start the communication, a subject, the time, communication means (telephone, email, SMS, video call, IM, etc.), etc. The initiator enters his/her attribute values or selects them from a predetermined list. The predetermined list is under control of module 136 or of server 144 so as to have the list interactive in the sense that a selected attribute value determines the options of other attribute values. For example, if the initiator selects the identity of a party with whom he/she intends to communicate via telephone, and this particular party is registered with system 100 or 200 as not being accessible via telephone, the option "via telephone" is not selectable from menu 304 after the party's identity has been entered or otherwise selected. This may mean that the party docs not have a telephone, or that the party has programmed rule base 146 that he/she is not to be contacted via telephone (for all initiators using system 100 or 200 or only for a specific initiator), or that rule base 146 specifies that the party is not available for telephone communication at the time selected by the initiator, etc. Above example includes a scenario wherein menu 304 is dynamically modified or dynamically created under control of rules 146 upon receiving a user input specifying a next modality of the desired communication.

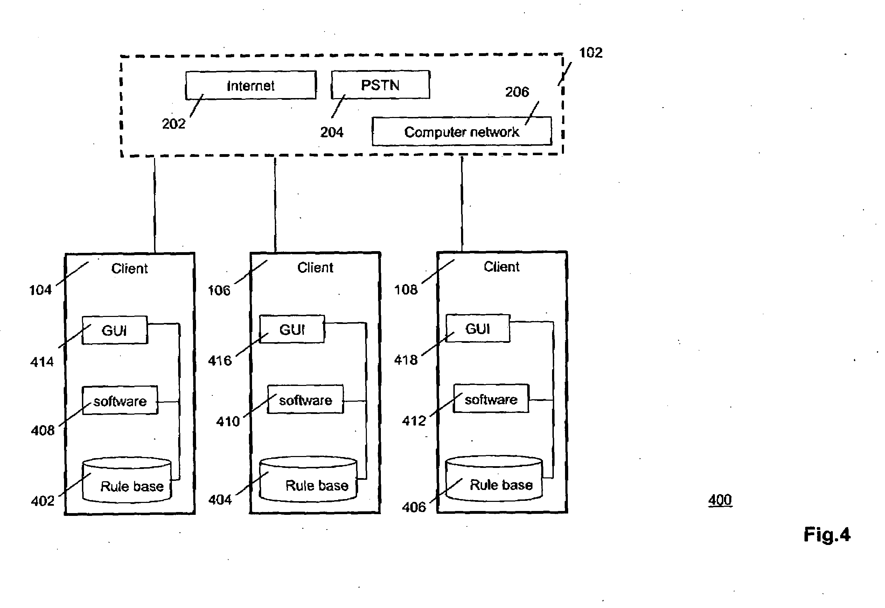

Fig.4 is another example 400 of a system in the invention. System 400 has a fully distributed configuration. Each of clients 104, 106 and 108 has a respective onboard rule base 402, 404 and 406 specifying the respective user's rules for communicating, as discussed with reference to rules 146 above. Each of clients 14-108 has installed a respective piece of software 408, 410 and 412, and a respective display monitor for displaying a respective GUI 414, 416 and 418. Operation of system 400 is explained with reference to the following scenario. The user of client 104 desires to communicate to the user of client 106 at a certain time of the day and about a certain topic. The user of client 104 invokes software 408 that generates a GUI 414. In GUI 414 the user of client 104 inputs information about the desired configuration of the communication: in this case, the destination is the user of client 106, and the desired moment for communicating is the time of the day at this moment. Upon software 408 receiving the indication that the intended recipient is the user of client 106, client 106 is accessed via network 102 and rule base 404 is consulted. Access can be made conditional and under control of software 410. That is, the user of client 106 has determined that only specific users arc allowed to access rule base 404. Identification of a user seeking access is based on, e.g., the network address of the accessing client, here client 104. If the user of client 104 is not one of the specific users who have permission to access rule base 404, software 410 returns a default message to software 408. Software 408 then controls client 104 so as to be in a conventional mode without software 408 further intervening. If the user of client 104 has obtained permission to access rule base 404, software 408 and 410 negotiate an actual configuration for the desired communication under control of rule base 404 and, possibly, rule base 402. If rule base 404 specifies a rule that at this moment of the day, the user of client 106 is not available to the user of client 104, but that messages can be forwarded to the user of client 108, software 408 terminates the data exchange with client 106 and seeks to access rule base 406 of client 108. Permission to access rule base 406 can be conditional as with client 106. Alternatively, permission can be conditionally granted to client 104 if re-directed from client 106 to client 108 during a specific time slot at a specific date. More intricate rules can be implemented as is clear to the person skilled in the art. Upon being granted access, software 408 and software 412 negotiate the actual configuration for communicating under control of rule base 406 and, possibly, rule base 402. If the configuration intended by the user of client 104 included the attribute "via telephone" and if rule base 406 specifies that this is impossible now, the attribute may be changed to "SMS", if both rule base 402 and rule base 406 hermit this modality at this moment. Software 408 then instructs GUI 414 to notify the user of client 104 of the changed attribute and to request the user to acknowledge the change. If the user of client 104 acknowledges the change, the communication in the actual configuration is then to client 108 instead of to intended client 106, and via SMS instead of via telephone. If the user of client 104 does not acknowledge the attribute change, software 408 returns to a waiting state for receiving new input from the user. Alternatively, software 408 is deactivated and client 104 can be operated as a conventional communications device.

The service of the invention can be commercially exploited in various interesting manners. For example, the service provider acts as a virtual operator, and the costs of the eventual communications established through the service are settled wholesale with the communications operators (e.g., Telco's). As another example, people who would like to use the service are to subscribe and pay a monthly fee. As another example, parties using the service can register for a fee with the service's communications directory that is categorized according to the attribute "topic". Such directory is known from the telephone environment under the name "Yellow Pages". In the invention, however, the environment extends beyond telephony and covers other electronic communications as well. The directory in the invention may also extend beyond businesses. As another example, an initiator's communication is routed through the service of the invention to a particular receiving party according to the attribute "topic". Imagine an initiator who initiates a communication to order a pizza being delivered to his/her street address without knowing the network address (e.g., telephone number or email address) of a suitable pizza delivery business. The service in the invention could therefore provide in GUI 414 a hierarchical attribute menu including an attribute "ordering products or services" and another attribute "pizza" to be checked by the initiator if applicable to the communication to be configured. Alternatively, the initiator enters these information items as text, or selects redefined icons, whereupon the system interprets the semantic meaning and acts accordingly. The identifier of the initiator is associated with his/her contact information including his/her street address, The service then looks up pizza delivery businesses within the neighborhood of the initiator and selects one based on one or more criterions, e.g., minimum distance to be covered between the business and the initiator's home address, number of calls registered in the past as made by the population of the initiator's home town to this delivery service, whether the delivery service has registered with the service in the invention, etc. Once selected, the communication between the initiator and the selected delivery service is initiated. As yet another example, end-users of the service in the invention can be offered more options to establish the communications for a higher fee. For example, end-users who pay a basic fee have their communication options limited to the attribute "via telephonc", whereas cnd-users paying a basic fee and an additional fee are given the options of an attribute "via telephone", and of an attribute "via email", and of an attribute "via SMS", etc. As still another option, end-users of the service in the invention may form social networks based on exchanging information about their rules as specified in their rule base, e.g., rule bases 402-406. One person may have set up clever rules that work well in his/her environment and others may want to adopt similar rules for their similar environment. Accordingly, a community can be formed based on sharing similar rules, thus leading to a collective optimization of the rules as applied by the service for these people. As yet another example, commercial parties pay a fee per call or other communication that was set up via the service of the invention under control of an attribute with a certain topic (e.g., insurance, mortgage, job vacancy, dating, cinema, public transportation etc.).

## Claims

1. A method of providing a service on a first network for enabling parties to communicate via a second network, the method comprising:
receiving via the first network an indication that a communication is sought to be established;
upon receipt of the indication, determining an actual configuration of the communication under combined control of the indication and a rule base; and
controlling initiation of the communication via the second network in the actual configuration.

2. The method of claim 1, wherein:
the indication comprises an attribute representative of an intended configuration of the communication;
the determining comprises conditionally modifying the attribute under control of thc rule base.

3. The method of claim 1, wherein the indication is received from an initiator different from one of the parties.

4. The method of claim 1, wherein the indication is received from an initiator being one of the parties.

5. The method of claim 2, wherein the attribute is representative of at least one of:
an identity of one or more of the parties;
a geographic location of one or more of the parties;
a temporal aspect of the communication;
means for communicating via the communications network;
a type of communications network;
a procedure for communicating; and
a topic of the communication.

6. The method of claim 2, wherein the determining comprises requesting at least one of the parties to accept or modify the attribute.

7. The method of claim 1, wherein the determining comprises accessing a database at a client of at least a specific one of the parties.

8. The method of claim 7, wherein the database comprises a declared preference of the specific party regarding the communication.

9. The method of claim 7, wherein the database comprises an activity schedule of the specific party.

10. The method of claim 7, wherein the database comprises information about an inventory of means for communicating via the network.

11. The method of claim 1, wherein the determining comprises accessing a database containing at least a declared preference of a specific one of the parties regarding the communicating.

12. A method of setting up communicating via a network with at least one party, the method comprising:
creating an indication that a communication is sought to be established;
determining an actual configuration of the communication under combined control of the indication and a rule base; and
controlling initiation of the communication via the network in the actual configuration.

13. The method of claim 12, wherein: ,
the indication comprises an attribute representative of an intended configuration of the communication;
the determining comprises conditionally modifying the attribute under control of the rule base.

14. The method of claim 13, wherein the attribute is representative of at least one of:
an identity of one or more of the parties;
a geographic location of one or more of the parties;
a temporal aspect of the communication;
means for communicating via the communications network;
a type of communications network;
a procedure for communicating; and
a topic of the communication.

15. The method of claim 13, wherein the determining comprises requesting the at least one party to accept or modify the attribute.

16. The method of claim 12, wherein the determining comprises accessing a database at a client of the at least one party.

17. The method of claim 16, wherein the database comprises a declared preference of the at least one party regarding the communication.

18. The method of claim 16, wherein the database comprises an activity schedule of the at least one party.

19. The method of claim 16, wherein the database comprises information about an inventory of means for communicating via the network.

20. The method of claim 12, wherein the determining comprises accessing a database containing at least a declared preference of a specific one of the parties regarding the communicating.

21. Software for implementing a method of setting up communicating via a network between at least two parties, the software comprising:
first instructions for creating an indication that a communication is sought to be established;
second instructions for determining an actual configuration of the communication under combined control of the indication and a rule base; and
third instructions for controlling initiation of the communication via the network in the actual configuration.
